# EUROPÄISCHE PATENTSCHRIFT

(11) **EP 2 234 829 B1**
(45) Veröffentlichungstag und Bekanntmachung des Hinweises auf die Patenterteilung: **18.01.2012**
(21) Anmeldenummer: 08870691.6
(22) Anmeldetag: 13.11.2008
(51) Int. Cl.: B60G 21/055

(54) **HYDRAULISCHE ABSICHERUNG EINER WANKSTABILISIERUNG**
HYDRAULIC PROTECTION OF A ROLLING STABILIZATION SYSTEM
SYSTÈME DE SÉCURITÉ HYDRAULIQUE POUR MÉCANISME ANTIROULIS

(30) Priorität: 18.01.2008 DE 102008004913
(43) Veröffentlichungstag der Anmeldung: 06.10.2010
(73) Patentinhaber: Conti Temic Microelectronic GmbH, 90411 Nürnberg (DE)
(72) Erfinder: ZELL, Andreas, 90411 Nürnberg (DE); PÖLZL, Stephan, 90452 Eckental (DE)
(74) Vertreter: Beck, Jörg
(86) Internationale Anmeldenummer: PCT/DE2008/001871
(87) Internationale Veröffentlichungsnummer: WO 2009/089809

(56) Entgegenhaltungen:
- WO-A-2006/058747
- WO-A-2006/105753
- DE-A1- 4 118 823
- DE-A1- 10 334 705
- DE-A1-102004 012 545
- US-A- 4 834 419

## Beschreibung

Die Erfindung betrifft eine Vorrichtung zur Absicherung einer Wankstabilisierung für Kraftfahrzeuge umfassend
eine erste, hydraulische Stabilisierungs-Einrichtung mit einem steuerbaren, ersten Richtungsventil und einem mit dem ersten Richtungsventil in Signalverbindung stehenden, ersten Aktor zur Ausübung eines stabilisierenden Moments auf eine erste Achse,
mindestens eine zweite, hydraulische Stabilisierungs-Einrichtung mit einem steuerbaren, zweiten Richtungsventil und einem mit dem zweiten Richtungsventil in Signalverbindung stehenden zweiten Aktor zur Ausübung eines stabilisierenden Moments auf eine zweite Achse und mindestens eine erste, hydraulisch auslösbare Sicherheits-Einrichtung zur Verriegelung zumindest der ersten Stabilisierungs-Einrichtung. Die Erfindung betrifft weiterhin ein Verfahren zur Absicherung einer Wankstabilisierung.

Bei aktiven Wankstabilisierungen von Kraftfahrzeugen werden Stellglieder von einer elektronischen Steuereinheit so angesteuert, dass aktive Stabilisatoren an den Achsen das Fahrzeug aufrichten. Hierbei sind üblicherweise jeweils Stabilisatoren an der Vorderachse und an der Hinterachse des Fahrzeugs vorgesehen. Bei einer Kurvenfahrt sollen beide Stabilisatoren den Fahrzeugaufbau auf der kurvenäußeren Seite abstützen. Ein Ansteuern der Stabilisatoren von Vorder- und Hinterachse an bezüglich der Fahrtrichtung gegenüberliegenden Seiten, ist fahrdynamisch kritisch und daher unbedingt zu vermeiden. Beim Einsatz von separaten Stabilisierungs-Einrichtungen für jede Achse wird deren korrekte Funktion daher üblicherweise von einem elektronischen Steuergerät überwacht. Dies führt zu hohen Anforderungen an die funktionale Sicherheit dieses Steuergeräts.

Aus der DE 10 2004 012 545 A1 ist eine Vorrichtung zur Absicherung einer Wankstabilisierung der eingangs genannten Gattung bekannt.

Es ist eine Aufgabe der vorliegenden Erfindung, eine Absicherung einer Wankstabilisierung für Kraftfahrzeuge zu schaffen, welche hydraulisch gesteuert ist und hohen Sicherheitsforderungen gerecht wird.

Diese Aufgabe ist erfindungsgemäß durch die Vorrichtung gemäß Anspruch 1 sowie durch das Verfahren gemäß Anspruch 8 gelöst.

Der Kern der Erfindung besteht darin, die Sicherheit einer Wankstabilisierung durch eine zweite, hydraulisch auslösbare Sicherheits-Einrichtung zur Verriegelung der zweiten Stabilisierungs-Einrichtung zu erhöhen. Die Sicherheits- Einrichtung löst bei Erfüllung einer vorgegebenen Auslöse-Bedingung automatisch aus und die Wankstabilisierung wird zumindest teilweise verriegelt und somit werden fahrdynamisch kritische Situationen verhindert.

Die Ausbildung der Sicherheits-Einrichtung als Sicherheitsventil gemäß Anspruch 2 ist besonders kostengünstig und effizient.

Eine Signalverbindung zwischen dem Sicherheitsventil und einem Drucksensor gemäß Anspruch 3 erhöht die Flexibilität und Bedienbarkeit der Vorrichtung.

Eine elektrische Entriegelbarkeit der Sicherheits-Einrichtung gemäß Anspruch 4 vereinfacht deren Zurückversetzen in den aktiven Zustand.

Eine elektrische Steuer-Einheit gemäß Anspruch 5 ermöglicht eine präzise und flexible Steuerung der Richtungsventile.

Die Anordnung der Vorrichtung an den Achsen eines Kraftfahrzeugs gemäß den Ansprüchen 6 und 7 führt zu einem erhöhten Fahrkomfort und einer verbesserten Fahrsicherheit.

Das Auslösen der Sicherheits-Einrichtung in Abhängigkeit von einer Auslöse-Bedingung durch das erfindungsgemäße Verfahren ermöglicht die variable Anpassung des Verfahrens an jeweils unterschiedliche Gegebenheiten.

Das automatische Auslösen der Sicherheits-Einrichtung bei Überschreiten eines vorgegebenen Unterschiedes der von der ersten Stabilisierungs-Einrichtung an die erste Achse ausgeübten Stellwirkung von der von der zweiten Stabilisierungs-Einrichtung auf die zweite Achse ausgeübten Stellwirkung gemäß Anspruch 9 ist besonders einfach realisierbar und führt wirkungsvoll zur Verhinderung von fahrdynamisch kritischen Situationen.

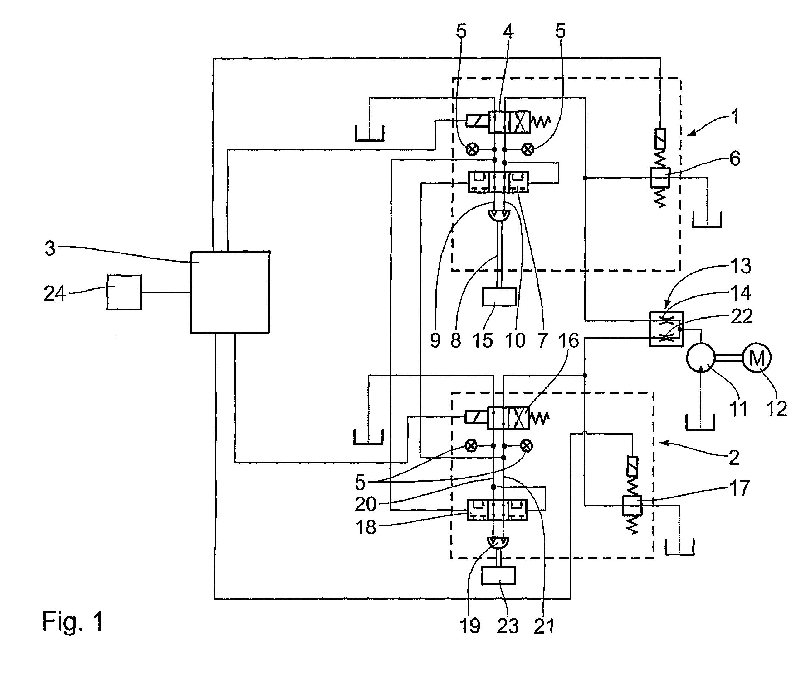

Weitere Merkmale und Einzelheiten der Erfindung ergeben sich aus der Beschreibung eines Ausführungsbeispiels anhand der Zeichnung. Figur 1 zeigt eine schematische Darstellung der erfindungsgemäßen Vorrichtung.

Eine Vorrichtung zur Absicherung einer Wankstabilisierung für Kraftfahrzeuge umfasst eine erste, hydraulische Stabilisierungs-Einrichtung 1, mindestens eine zweite, hydraulische Stabilisierungs-Einrichtung 2 und eine elektronische Steuer-Einheit 3. Die elektronische Steuer-Einheit 3 ist insbesondere programmierbar. Die erste hydraulische Stabilisierungs-Einrichtung 1 umfasst ein erstes Richtungsventil 4, zwei Drucksensoren 5, ein erstes Proportionalventil 6, ein erstes Sicherheitsventil 7 und einen ersten Schwenkmotor 8. Das erste Richtungsventil 4 ist steuerbar, insbesondere mittels der elektronischen Steuer-Einheit 3. Hierzu steht die elektronische Steuer-Einheit 3 in Signalverbindung mit dem ersten Richtungsventil 4. Das erste Richtungsventil 4 weist zwei Durchflusswege auf. Die Durchflussrichtung ist mittels der elektronischen Steuer-Einheit 3 steuerbar. Das erste Richtungsventil kann eine mechanische Rückstell-Einrichtung aufweisen.

Die erste hydraulische Stabilisierungs-Einrichtung 1 umfasst weiterhin eine erste Hydraulikleitung 9 und eine zweite Hydraulikleitung 10. Die Hydraulikleitungen 9, 10 sind von einer Pumpe 11 mit einem Motor 12 über einen Stromteiler 13 mit einem ersten Drosselventil 14 hydraulisch mit Druck beaufschlagbar. Der Motor 12 ist im Allgemeinen das Antriebsaggregat des Fahrzeuges. Der maximal erreichbare Druck in den Hydraulikleitungen 9, 10 ist mittels der Pumpe 11 und dem ersten Drosselventil 14 im Stromteiler 13 regelbar. Der tatsächlich vorherrschende Druck in den Hydraulikleitungen 9, 10 ist mittels der elektronischen Steuer-Einheit 3 über das steuerbare erste Proportionalventil 6 regelbar. Das Proportionalventil 6 steht in Signalverbindung mit der elektronischen Steuer-Einheit 3.

Die Drucksensoren 5 sind jeweils in den Hydraulikleitungen 9, 10 zwischen dem ersten Richtungsventil 4 und dem ersten Schwenkmotor 8 angeordnet.

Das erste Richtungsventil 4 weist zwei Stellungen auf. Hierbei entspricht die erste Stellung einer ersten Wirkrichtung des in den Hydraulikleitungen 9, 10 vorherrschenden Drucks auf den ersten Schwenkmotor 8, während die zweite Stellung einer der ersten Wirkrichtung entgegengesetzten Wirkrichtung auf den Schwenkmotor 8 entspricht. Somit ist der Betrag des auf den Schwenkmotor 8 wirkenden Drucks von der elektronischen Steuer-Einheit 3 mittels des ersten Proportionalventils 6 regelbar, während die Wirkrichtung mittels des ersten Richtungsventils 4 steuerbar ist.

Der Schwenkmotor 8 ist eine spezielle Ausführung eines Aktors zur Ausübung eines stabilisierenden Moments auf eine erste Achse 15. Bei der ersten Achse 15 handelt es sich insbesondere um die Vorderachse eines Kraftfahrzeugs. Alternative Stellglieder sind ebenfalls möglich. Die genaue Ankopplung des Schwenkmotors 8 an die erste Achse 15 ist in Fig. 1 nicht dargestellt. Mittels des Schwenkmotors 8 ist ein Torsionsmoment auf eine in der Fig. 1 nicht dargestellte Biegestange ausübbar, was zu einem Stabilisierungsmoment um die Fahrzeuglängsachse führt.

Die zweite hydraulische Stabilisierungs-Einrichtung 2 ist im Wesentlichen identisch zur ersten hydraulischen Stabilisierungs-Einrichtung 1 aufgebaut, auf deren Beschreibung hiermit verwiesen wird. Sie umfasst insbesondere ein zweites Richtungsventil 16, Drucksensoren 5, ein zweites Proportionalventil 17, ein zweites Sicherheitsventil 18, einen zweiten Schwenkmotor 19, eine dritte und vierte Hydraulikleitung 20, 21, wobei die Hydraulikleitungen 20, 21 von der Pumpe 11 über den Stromteiler 13 mit einem zweiten Drosselventil 22 mit Druck beaufschlagt werden. Die Drosselventile 14 und 22 sind unabhängig voneinander einstellbar. Hierdurch kann der maximal erreichbare Druck in den ersten und zweiten Hydraulikleitungen 9, 10 der ersten Stabilisierungs-Einrichtung 1 ein anderer sein als der in der dritten und vierten Hydraulikleitung 20, 21 der zweiten Stabilisierungs-Einrichtung 2. Der zweite Schwenkmotor 19 ist zur Ausübung eines stabilisierenden Moments an eine zweite Achse 23 gekoppelt. Bei der zweiten Achse 23 handelt es sich insbesondere um die Hinterachse eines Kraftfahrzeugs.

Im Folgenden wird die hydraulisch auslösbare Sicherheits-Einrichtung zur Verriegelung der ersten Stabilisierungs-Einrichtung 1 beschrieben. Die Sicherheits-Einrichtung umfasst das erste Sicherheitsventil 7. Das erste Sicherheitsventil 7 ist in den Hydraulikleitungen 9, 10 zwischen dem ersten Richtungsventil 4 und dem ersten Schwenkmotor 8 angeordnet. Es weist eine erste Stellung auf, in welcher der erste Schwenkmotor 8 in direkter hydraulischer Verbindung mit dem ersten Richtungsventil 4 steht. Das erste Sicherheitsventil 7 weist außerdem zumindest eine weitere Stellung auf, in welcher der erste Schwenkmotor 8 vom ersten Richtungsventil 4 entkoppelt ist, d. h. nicht länger mittels der Hydraulikleitungen 9, 10 mit Druck beaufschlagbar ist. Der erste Schwenkmotor 8 ist in dieser Stellung des ersten Sicherheitsventils 7 in Neutralstellung verriegelt, d. h. das vom Schwenkmotor 8 in dieser Stellung auf die erste Achse15 ausgeübte, aktive Stabilisierungsmoment ist höchstens vernachlässigbar klein.

Der Auslösemechanismus des ersten Sicherheitsventils 7 steht in hydraulischer Verbindung mit mindestens einer der Hydraulikleitungen 9, 10 der ersten Stabilisierungs-Einrichtung 1 sowie mit mindestens einer der Hydraulikleitungen 20, 21 der zweiten Stabilisierungs-Einrichtung 2. In dem in der Fig. 1 dargestellten Ausführungsbeispiel steht der Auslösemechanismus des ersten Sicherheitsventils 7 in hydraulischer Verbindung mit der zweiten Hydraulikleitung 10 der ersten Stabilisierungs-Einrichtung 1 und der entsprechenden, d. h. auf der gleichen Seite bezüglich einer nicht dargestellten Fahrzeuglängsachse angeordneten, vierten Hydraulikleitung 21 der zweiten Stabilisierungs-Einrichtung 2. Das erste Sicherheitsventil 7 ist derart ausgebildet, dass es bei Überschreiten eines vorgegebenen Unterschiedes des Drucks in der zweiten Hydraulikleitung 10 von dem in der vierten Hydraulikleitung 21 automatisch auslöst, d. h. von der ersten, freien Stellung, in welcher der erste Schwenkmotor 8 mittels der Hydraulikleitungen 9, 10 mit Druck beaufschlagbar ist, in die zweite Stellung wechselt, in welcher der erste Schwenkmotor 8 in Neutralstellung verriegelt ist. Vorteilhafterweise ist das Sicherheitsventil 7 zusätzlich elektrisch auslösbar. In einer bevorzugten Ausführungsform ist das erste Sicherheitsventil 7 nach einem Auslösen elektrisch entriegelbar, d. h. von der zweiten Stellung in die erste Stellung zurückführbar. Hierzu kann insbesondere eine Signalverbindung zwischen der elektronischen Steuer-Einheit 3 und dem ersten Sicherheitsventil 7 vorgesehen sein.

In einer weiteren, nicht dargestellten Ausführungsform steht das erste Sicherheitsventil 7 in zumindest mittelbarer Signalverbindung mit mindestens jeweils einem der Drucksensoren 5 der ersten Stabilisierungs-Einrichtung 1 und der zweiten Stabilisierungs-Einrichtung 2. Es ist insbesondere vorgesehen, dass das erste Sicherheitsventil 7 zusätzlich zu seiner hydraulischen Auslösbarkeit mittels eines in Fig. 1 nicht dargestellten, von den Drucksensoren 5 steuerbaren Aktuators auslösbar ist. Der Aktuator kann vorzugsweise in Signalverbindung mit der elektronischen Steuer-Einheit 3 stehen.

Bezüglich der Anordnung und der Funktion des zweiten Sicherheitsventils 18 in der zweiten Stabilisierungs-Einrichtung 2 wird auf die entsprechende Beschreibung des ersten Sicherheitsventils 7 verwiesen.

Der Auslösemechanismus des zweiten Sicherheitsventils 18 steht insbesondere in hydraulischer Verbindung mit der ersten Hydraulikleitung 9 der ersten Stabilisierungs-Einrichtung 1 und der entsprechenden, d. h. auf der gleichen Seite bezüglich einer nicht dargestellten Fahrzeuglängsachse angeordneten, dritten Hydraulikleitung 20 der zweiten Stabilisierungs-Einrichtung 2. Es dient insbesondere zur Verriegelung des zweiten Schwenkmotors 19. Der Auslösemechanismus des zweiten Sicherheitsventils 18 kann auch in hydraulischer Verbindung mit den gleichen Hydraulikleitungen wie derjenige des ersten Sicherheitsventils 7 stehen.

Weiterhin ist zumindest ein in Fig. 1 nur schematisch dargestellter Sensor 24 vorgesehen, welcher in Signalverbindung mit der elektronischen Steuer-Einheit 3 steht. Mittels des mindestens einen Sensors 24 ist die elektronische Steuer-Einheit 3 mit fahrdynamisch relevanten Daten zur Bestimmung des auf die Achsen 15, 23 auszuübenden, stabilisierenden Moments versorgbar. Dieser Sensor kann seine Daten auch ganz oder teilweise über einen Kommunikationsbus senden oder eine weitere elektronische Steuereinheit umfassen, welche Daten versendet.

Selbstverständlich kann die Vorrichtung zur Absicherung einer Wankstabilisierung mit mehr als zwei Achsen und zugehörigen Stabilisierungs-Einrichtungen angepasst werden.

Im Folgenden wird die Funktion der erfindungsgemäßen Vorrichtung beschrieben. Zunächst wird in den Hydraulikleitungen 9, 10 bzw. 20, 21 mittels der Pumpe 11 über den Stromteiler 13 mit dem ersten Drosselventil 14 und dem zweiten Drosselventil 22 ein Druck aufgebaut. Der maximal erreichbare Druck ist mittels der Drosselventile 14 bzw. 22 regelbar.

Während der Fahrt versorgt der mindestens eine Sensor 24 die elektronische Steuer-Einheit 3 mit relevanten Daten bzgl. des fahrdynamischen Zustands des Fahrzeugs. Aus diesen Daten bestimmt die elektronische Steuer-Einheit 3 das auf die erste Achse 15 bzw. auf die zweite Achse 23 auszuübende Stabilisierungsmoment.

Die elektronische Steuer-Einheit 3 steuert in Abhängigkeit der Daten von dem mindestens einen Sensor 24 den Druck in den Hydraulikleitungen 9, 10 mittels des ersten Proportionalventils 6 sowie die Wirkrichtung des Drucks auf den ersten Schwenkmotor 8 mittels des ersten Richtungsventils 4. Entsprechend steuert die elektronische Steuer-Einheit 3 den Druck in den Hydraulikleitungen 20, 21 mittels des zweiten Proportionalventils 17 sowie die Wirkrichtung des Drucks auf den zweiten Schwenkmotor 19 mittels des zweiten Richtungsventils 16. Hierdurch ist insbesondere bei einer Kurvenfahrt eine unerwünschte Neigung des Fahrzeugs gegenüber der Fahrzeuglängsachse durch entsprechende Kompensation der Fahrzeugabstützung an den Achsen 15, 23 vermeidbar. Im Ausgangszustand ist das erste Sicherheitsventil 7 geöffnet und ermöglicht einen freien Durchfluss in den Hydraulikleitungen 9, 10 in beide Richtungen. Entsprechend ist im Ausgangszustand das zweite Sicherheitsventil 18 geöffnet und ermöglicht einen freien Durchfluss in den Hydraulikleitungen 20, 21 in beide Richtungen. Wird jedoch eine Auslöse-Bedingung erfüllt, löst das erste Sicherheitsventil 7 aus und verriegelt den ersten Schwenkmotor 8 in einer Neutralstellung. Vorteilhafterweise löst auch das zweite Sicherheitsventil 18 bei Erfüllen der Auslöse-Bedingung aus und verriegelt den zweiten Schwenkmotor 19 in einer Neutralstellung. Die Auslöse-Bedingungen für das erste Sicherheitsventil 7 und das zweite Sicherheitsventil 18 sind insbesondere identisch. Sie können jedoch auch verschieden sein. Bei verriegelter Stellung des Sicherheitsventils 7 ist der Schwenkmotor 8 nicht mit Druck beaufschlagbar. Die erste Stabilisierungs-Einrichtung 1 übt in diesem Zustand kein aktives Stabilisierungsmoment auf die erste Achse 15 aus. Entsprechend ist der zweite Schwenkmotor 19 bei verriegelter Stellung des Sicherheitsventils 18 nicht mit Druck beaufschlagbar. Die zweite Stabilisierungs-Einrichtung 2 übt in diesem Zustand kein aktives Stabilisierungsmoment auf die zweite Achse 23 aus. Die Sicherheitsventile 7, 18 lösen insbesondere bei Überschreiten eines vorgegebenen Unterschiedes der von der ersten Stabilisierungs-Einrichtung 1 auf die erste Achse 15 ausgeübten Stellwirkung und der von der zweiten Stabilisierungs-Einrichtung 2 auf die zweite Achse 23 ausgeübten Stellwirkung aus. Da die von dem Schwenkmotor 8 bzw. 19 auf die jeweils zugehörige Achse 15 bzw. 23 ausgeübte Stellwirkung vom Druck in den Hydraulikleitungen 9, 10 bzw. 20, 21 abhängig ist, ist ein Unterschied in der Stellwirkung als Druckunterschied in den entsprechenden Hydraulikleitungen 9, 20 bzw. 10, 21 messbar. Das erste Sicherheitsventil 7 löst bei Überschreiten eines vorgegebenen Druckunterschieds in den jeweiligen Hydraulikleitungen 10, 21 hydraulisch gesteuert, automatisch aus. Entsprechend löst das zweite Sicherheitsventil 18 bei Überschreiten eines vorgegebenen Druckunterschieds in den jeweiligen Hydraulikleitungen 9, 20 hydraulisch gesteuert, automatisch aus. Nach einem Auslösen können das erste Sicherheitsventil und das zweite Sicherheitsventil 18 bevorzugterweise elektrisch entriegelt werden.

Durch die automatische, hydraulische Auslösung der Sicherheitsventile 7, 18 werden die Anforderungen an die funktionale Sicherheit der elektronischen Steuer-Einheit 3 vermindert.

## Patentansprüche

1. Vorrichtung zur Absicherung einer Wankstabilisierung für Kraftfahrzeuge umfassend
a. eine erste, hydraulische Stabilisierungs-Einrichtung (1) mit
i. einem steuerbaren, ersten Richtungsventil (4) und
ii. einem mit dem ersten Richtungsventil (4) in Signalverbindung stehenden, ersten Aktor (8) zur Ausübung eines stabilisierenden Moments auf eine erste Achse (15),
b. mindestens eine zweite, hydraulische Stabilisierungs-Einrichtung (2) mit
i. einem steuerbaren, zweiten Richtungsventil (16) und ii. einem mit dem zweiten Richtungsventil (16) in Signalverbindung stehenden zweiten Aktor (19) zur Ausübung eines stabilisierenden Moments auf eine zweite Achse (23) und
c. mindestens eine erste, hydraulisch auslösbare Sicherheits-Einrichtung zur Verriegelung zumindest der ersten Stabilisierungs-Einrichtung (1),
**dadurch gekennzeichnet, dass** mindestens eine zweite, hydraulisch auslösbare Sicherheits-Einrichtung zur Verriegelung zumindest der zweiten Stabilisierungs-Einrichtung (2) vorgesehen ist.

2. Vorrichtung nach Anspruch 1, **dadurch gekennzeichnet, dass** die Sicherheits-Einrichtung mindestens ein Sicherheitsventil (7, 18) umfasst.

3. Vorrichtung gemäß Anspruch 2, **dadurch gekennzeichnet, dass** das mindestens eine Sicherheitsventil (7, 18) mittelbar oder unmittelbar in Signalverbindung mit mindestens einem Drucksensor (5) steht.

4. Vorrichtung gemäß einem der vorhergehenden Ansprüche, **dadurch gekennzeichnet, dass** die Sicherheits-Einrichtung elektrisch auslösbar und/oder elektrisch entriegelbar ist.

5. Vorrichtung gemäß einem der vorhergehenden Ansprüche, **dadurch gekennzeichnet, dass** eine elektrische Steuer-Einheit (3) zur Steuerung der Richtungsventile (4, 16) vorgesehen ist.

6. Vorrichtung gemäß einem der vorhergehenden Ansprüche, **dadurch gekennzeichnet, dass** es sich bei der ersten Achse (15) um eine Vorderachse eines Kraftfahrzeugs handelt.

7. Vorrichtung gemäß einem der vorhergehenden Ansprüche, **dadurch gekennzeichnet, dass** es sich bei der zweiten Achse (23) um eine Hinterachse eines Kraftfahrzeugs handelt.

8. Verfahren zur Absicherung einer Wankstabilisierung umfassend die folgenden Schritte:
a. Bereitstellen einer ersten, hydraulischen Stabilisierungs-Einrichtung (1) und mindestens einer zweiten, hydraulischen Stabilisierungs-Einrichtung (2),
b. Vergleichen der mittels der ersten Stabilisierungs-Einrichtung (1) auf eine erste Achse (15) ausgeübten Stellwirkung mit der von der mindestens zweiten Stabilisierungs-Einrichtung (2) auf eine zweite Achse (23) ausgeübten Stellwirkung,
c. hydraulisch gesteuertes Auslösen zumindest einer ersten Sicherheits-Einrichtung zum Verriegeln zumindest der ersten Stabilisierungs-Einrichtung (1) bei Erfüllen einer Auslöse-Bedingung.

9. Verfahren gemäß Anspruch 8, **dadurch gekennzeichnet, dass** die erste Sicherheits-Einrichtung ein Sicherheitsventil (7) umfasst, welches bei Überschreiten eines vorgegebenen Unterschiedes der von der ersten Stabilisierungs-Einrichtung (1) auf die erste Achse (15) ausgeübten Stellwirkung und der von der mindestens zweiten Stabilisierungs-Einrichtung (2) auf die zweite Achse (23) ausgeübten Stellwirkung, auslöst.

## Claims

1. Device for the protection of a rolling stabilization system for motor vehicles, comprising
a. a first hydraulic stabilization device (1), having
i. a controllable first directional valve (4) and
ii. a first actuator (8), which is in signal transmitting connection with the first directional valve (4), for exerting a stabilizing moment on a first axle (15),
b. at least one second hydraulic stabilization device (2), having
i. a controllable second directional valve (16) and
ii.a second actuator (19), which is in signal transmitting connection with the second directional valve (16), for exerting a stabilizing moment on a second axle (23),
c. at least one first hydraulically triggerable safety device for locking at least the first stabilization device (1),
**characterized in that** at least one second hydraulically triggerable safety device for locking at least the second stabilization device (2) is provided.

2. Device according to Claim 1, **characterized in that** the safety device comprises at least one safety valve (7, 18).

3. Device according to Claim 2, **characterized in that** the at least one safety valve (7, 18) is in indirect or direct signal transmitting connection with at least one pressure sensor (5).

4. Device according to one of the preceding claims, **characterized in that** the safety device can be triggered electrically and/or unlocked electrically.

5. Device according to one of the preceding claims, **characterized in that** an electric control unit (3) is provided for controlling the directional valves (4, 16).

6. Device according to one of the preceding claims, **characterized in that** the first axle (15) is a front axle of a motor vehicle.

7. Device according to one of the preceding claims, **characterized in that** the second axle (23) is a rear axle of a motor vehicle.

8. Method for the protection of a rolling stabilization system, comprising the following steps:
a. provision of a first hydraulic stabilization device (1) and at least one second hydraulic stabilization device (2),
b. comparison of the actuating effect exerted on a first axle (15) by means of the first stabilization device (1) with the actuating effect exerted on a second axle (23) by the at least second stabilization device (2),
c. hydraulically controlled triggering of at least a first safety device for locking at least the first stabilization device (1) if a trigger condition is fulfilled.

9. Method according to Claim 8, **characterized in that** the first safety device comprises a safety valve (7), which is triggered if a predetermined difference between the actuating effect exerted on the first axle (15) by the first stabilization device (1) and the actuating effect exerted on the second axle (23) by the at least second stabilization device (2) is exceeded.

## Revendications

1. Ensemble de sécurité anti-roulis pour véhicules automobiles, l'ensemble comprenant :
a. un premier dispositif hydraulique de stabilisation (1) présentant
i. une première soupape directionnelle (4) asservie et
ii. un premier actionneur (8) communiquant par signaux avec la première soupape directionnelle (4) et exerçant un couple de stabilisation sur un premier essieu (15),
b. au moins un deuxième dispositif hydraulique de stabilisation (2) présentant
i. une deuxième soupape directionnelle (16) asservie et
ii. un deuxième actionneur (19) en communication de signaux avec la deuxième soupape directionnelle (16) et exerçant un couple de stabilisation sur un deuxième essieu (23) et
c. au moins un premier dispositif de sécurité déclenché hydrauliquement et qui verrouille au moins le premier dispositif de stabilisation (1),
**caractérisé en ce que**
au moins un deuxième dispositif de sécurité déclenché hydrauliquement est prévu pour verrouiller au moins le deuxième dispositif de stabilisation (2).

2. Ensemble selon la revendication 1, **caractérisé en ce que** le dispositif de sécurité comporte au moins une soupape de sécurité (7, 18).

3. Ensemble selon la revendication 2, **caractérisé en ce que** la ou les soupapes de sécurité (7, 18) communiquent directement ou indirectement par signaux avec au moins un détecteur de pression (5).

4. Ensemble selon l'une des revendications précédentes, **caractérisé en ce que** le dispositif de sécurité peut être déclenché électriquement et/ou déverrouillé électriquement.

5. Ensemble selon l'une des revendications précédentes, **caractérisé en ce qu'**une unité électrique de commande (3) est prévue pour commander les soupapes directionnelles (4, 16).

6. Ensemble selon l'une des revendications précédentes, **caractérisé en ce que** le premier essieu (15) est l'essieu avant d'un véhicule automobile.

7. Ensemble selon l'une des revendications précédentes, **caractérisé en ce que** le deuxième essieu (23) est l'essieu arrière d'un véhicule automobile.

8. Procédé de sécurité anti-roulis, comprenant les étapes qui consistent à _{:}
a. prévoir un premier dispositif hydraulique de stabilisation (1) et au moins un deuxième dispositif hydraulique de stabilisation (2),
b. comparer l'effet d'ajustement exercé sur un premier essieu (15) au moyen du premier dispositif de stabilisation (1) à l'effet d'ajustement exercé sur un deuxième essieu (23) par le ou les deuxièmes dispositifs de stabilisation (2),
c. déclencher sous commande hydraulique au moins un premier dispositif de sécurité pour verrouiller au moins le premier dispositif de stabilisation (1) lorsqu'une condition de déclenchement est satisfaite.

9. Procédé selon la revendication 8, **caractérisé en ce que** le premier dispositif de sécurité comporte une soupape de sécurité (7) qui se déclenche lorsqu'une différence prédéterminée entre l'effet d'ajustement exercé sur le premier essieu (15) par le premier dispositif de stabilisation (1) et l'effet d'ajustement exercé sur le deuxième essieu (23) par le ou les deuxièmes dispositifs de stabilisation (2).
